# EUROPÄISCHE PATENTSCHRIFT

(11) **EP 1 836 451 B1**
(45) Veröffentlichungstag und Bekanntmachung des Hinweises auf die Patenterteilung: **08.11.2017**
(21) Anmeldenummer: 05821777.9
(22) Anmeldetag: 12.12.2005
(51) Int. Cl.: F28F 21/08, F28F 19/06, F28F 19/00

(54) **VORRICHTUNG ZUM AUSTAUSCH VON WÄRME FÜR SÄUREHALTIGE GASE**
DEVICE FOR EXCHANGING HEAT FOR GASES CONTAINING ACIDS
DISPOSITIF D'ECHANGE DE CHALEUR DESTINE A DES GAZ CONTENANT DE L'ACIDE

(30) Priorität: 13.12.2004 DE 102004060154
(43) Veröffentlichungstag der Anmeldung: 26.09.2007
(73) Patentinhaber: MAHLE Behr GmbH & Co. KG, 70469 Stuttgart (DE)
(72) Erfinder: GRÜNENWALD, Bernd, 72622 Nürtingen (DE); KNÖDLER, Wolfgang, 71332 Waiblingen (DE)
(74) Vertreter: Grauel, Andreas
(86) Internationale Anmeldenummer: PCT/EP2005/013289
(87) Internationale Veröffentlichungsnummer: WO 2006/063759

(56) Entgegenhaltungen:
- EP-A2- 1 331 462
- EP-A2- 1 391 679
- DE-A1- 10 029 386
- FR-A1- 2 855 602
- JP-A- H11 264 691
- JP-A- S60 251 243
- US-A1- 2002 078 566
- US-A1- 2002 078 566
- US-B1- 6 316 126
- PATENT ABSTRACTS OF JAPAN Bd. 1997, Nr. 07, 31. Juli 1997 (1997-07-31) -& JP 09 088614 A (HINO MOTORS LTD), 31. März 1997 (1997-03-31)
- PATENT ABSTRACTS OF JAPAN Bd. 008, Nr. 022 (M-272), 31. Januar 1984 (1984-01-31) -& JP 58 182096 A (NISSAN JIDOSHA KK), 24. Oktober 1983 (1983-10-24)
- PATENT ABSTRACTS OF JAPAN Bd. 012, Nr. 061 (M-671), 24. Februar 1988 (1988-02-24) -& JP 62 206387 A (MITSUBISHI ALUM CO LTD), 10. September 1987 (1987-09-10)

## Beschreibung

Die Erfindung betrifft eine Vorrichtung zum Austausch von Wärme zwischen einem säurehaltigen Gas und einem Wärmetauschermedium, mit zumindest einem Strömungskanal für das säurehaltige Gas.

Bei solchen Vorrichtungen, beispielsweise bei luftgekühlten oder auch kühlmittelgekühlten Systemen, insbesondere bei Ladeluftkühlern, die beispielsweise von rückgeführtem Abgas im Falle einer Niederdruck-Abgasrückführung bei Dieselmotoren durchströmt werden, treten in Folge der relativ geringen Temperaturen, welche unter dem Taupunkt der Gasinhaltsstoffe liegen, Korrosionsprobleme im Ladeluftkühler auf, da sich beispielsweise schwefelsaures Abgaskondensat und gegebenenfalls auch Chloride aus der Ansaugluft ansammeln. Ladeluftkühler für diese Anwendungsfälle werden aus diesem Grund üblicherweise aus nichtrostenden Stählen hergestellt. JP09088614 A und EP1331462 A2 bzw. JP11264691 A offenbaren Ladelüftkühler bzw. einen Abgaskühler mit jeweils zumindest einem Strömungskanal für das Ladeluft bzw. Abgas, der im wesentlichen aus Aluminium und/oder einer Aluminiumlegierung besteht und innenseitig mit einem Korrosionsschutz versehen ist, der als Beschichtung ausgebildet ist.

Es ist unter Umständen eine Aufgabe der Erfindung, Vorrichtungen der eingangs genannten Art zu verbessern, insbesondere in ihrer Herstellung einfacher und/oder kostengünstiger zu gestalten. Insbesondere sollen wesentliche Bauteile eines Wärmeübertragers, insbesondere Ladeluftkühlers, wie Rohre, Rohrböden, Luftkästen und dergleichen, vor tiefengängiger Korrosion durch ein säurehaltiges Gas geschützt werden.

Die Aufgabe der Erfindung wird gelöst durch eine Vorrichtung mit den Merkmalen des Anspruchs 1. Gemäß der vorliegenden Erfindung weist eine Vorrichtung zum Austausch von Wärme zumindest einen, bevorzugt zwei oder mehr Strömungskanäle für ein säurehaltiges Gas auf, die im wesentlichen aus Aluminium oder einer Aluminiumlegierung bestehen, wobei der zumindest eine Strömungskanal innenseitig mit einem Korrosionsschutz versehen ist und der Korrosionsschutz als Beschichtung ausgebildet ist, wobei der Korrosionsschutz elektrochemisch unedle Bereiche aufweist, so dass ein kathodischer Korrosionsschutz für zu schützende Bereiche des Strömungskanals vorgesehen ist und die elektrochemische Potentialdifferenz zwischen den zu schützenden Bereichen und den unedlen Bereichen mindestens 20 mV, insbesondere mindestens 50 mV, beträgt und der Korrosionsschutz aus einem Metall und/oder einer Legierung, insbesondere einer Aluminiumlegierung, besteht, wobei in dem zumindest einen Strömungskanal eine oder mehrere Turbulenzeinlagen und/oder eine oder mehrere Rippen vorgesehen sind und die Turbulenzeinlagen und Rippen bezogen auf die zu schützenden Kernbereiche aus einem unedlen Material bestehen oder mit einem unedlen Metall, einer unedlen Phase oder einer unedlen Legierung überzogen sind, wobei der Strömungskanal und gegebenenfalls die Turbulenzeinlage beziehungsweise Rippe eine Lotplattierung aufweist, der Korrosionsschutz auf der Lotplattierung aufgebracht ist, wobei als Lotplattierung eine AlSi-Lotplattierung vorgesehen ist, wobei die Plattierung unedle Elemente aufweist, und der Siliziumgehalt der Lotplattierung im Bereich von 4 bis 15 Gew.-%, insbesondere von 5 bis 12 Gew.-%, der Zinkgehalt im Bereich von 0,05 bis 10 Gew.-%, insbesondere von 0,2 bis 5 Gew.-%, und der Indium-, Zinn- und/oder Vanadiumgehalt in einem Bereich von 0,0 bis 0,3 Gew.-% liegen. Ein säurehaltiges Gas im Sinne der vorliegenden Erfindung ist ein Gas, das absichtlich oder unabsichtlich mit festen und/oder flüssigen Zusätzen angereichert ist, die selbst oder in wässriger Lösung einen pH-Wert kleiner 7, insbesondere kleiner 5, aufweisen. Beispiele für ein säurehaltiges Gas sind das insbesondere Schwefeloxide oder Schwefelsäure enthaltende Abgas eines Verbrennungsmotors, beispielsweise eines Dieselmotors, oder die Ladeluft für einen Verbrennungsmotor, nachdem sie mit rückgeführtem Abgas gemischt wurde.

Um eine Zerstörung des oder der Strömungskanäle aufgrund des Säuregehaltes des Gases zu verhindern oder herauszuzögern, ist der oder die Strömungskanäle mit einem Korrosionsschutz versehen. Der Korrosionsschutz ist als Beschichtung ausgebildet. Bevorzugt ist eine Innenseite des Strömungskanals vollständig mit dem Korrosionsschutz bedeckt. Unter Umständen ist jedoch eine unvollständige und gegebenenfalls mit Aufwandsersparnis verbundene Bedeckung, beispielsweise aufgrund von Rissen, Poren oder Spalten einer Beschichtung oder Plattierung, ausreichend.

Gemäß der Erfindung weist der Korrosionsschutz elektrochemisch unedle Bereiche auf, die einen kathodischen Korrosionsschutz für zu schützende Bereiche, beispielsweise eines Kernmaterials des Strömungskanals, vorgesehen ist. Dabei ist nicht notwendigerweise ein vollständiger Überzug des zu schützenden Bereichs mit einem unedlen Material erforderlich, sondern vielmehr sind auch unedle Teilbereiche ausreichend, beispielsweise in Form von Einlagen, insbesondere Turbulenzeinlagen oder Rippen. Ebenfalls ist der Überzug nur in den Bereichen erforderlich, die in Kontakt mit dem korrosiven Gas sind, wobei insbesondere eine teilweise flächige Beschichtung ausreichend ist. Insbesondere werden einzelne Teile miteinander hartverlötet. Das Verlöten kann insbesondere unter Vakuum oder unter Schutzgas mit oder ohne Flussmitteln erfolgen.

Auf Grund einer elektrochemischen Potentialdifferenz zwischen zu schützenden Bereichen und einem demgegenüber unedleren Korrosionsschutz oxidiert beziehungsweise korrodiert der Korrosionsschutz, nicht aber die edleren, zu schützenden Bereiche. Der Korrosionsschutz dient somit als Opferanode. Vorzugsweise steigert der Korrosionsschutz durch seine Oxidation den pH-Wert des säurehaltigen Gases beziehungsweise der darin enthaltenen sauren Medien.

Die elektrochemische Potentialdifferenz zwischen zu schützenden Bereichen und unedlen Bereichen des Korrosionsschutzes beträgt mindestens 20 mV, insbesondere mindestens 50 mV. Ein besonders bevorzugter Schutz ist bei einer Potentialdifferenz von mindestens 100 mV gegeben.

Um einen guten Korrosionsschutz der zu schützenden Bereiche zu gewährleisten, sind zumindest bereichsweise die mit einem korrosiven Medium in Kontakt stehenden Flächen mit einem unedlen Metall, einer unedlen Phase oder einer unedlen Legierung überzogen. Alternativ (oder zusätzlich) sind diese Flächen elektrisch leitend mit einem solchen unedlen Bereich verbunden.

Ein Kernmaterial des Strömungskanals besteht vorzugsweise aus einer Aluminiumlegierung der Reihe AA3xxx, insbesondere aus AA3003 oder AA3005, beziehungsweise aus einer im Wärmeübertragerbau üblichen Modifikation und/oder aus Reinaluminium (AA1xxx), insbesondere AA1145 oder AA1050 , beziehungsweise aus einer im Wärmeübertragerbau üblichen Modifikation, und/oder aus einer kupferhaltigen Aluminiumlegierung der Reihe AA2xxx beziehungsweise aus einer im Wärmeübertragerbau üblichen Modifikation und/oder einer Aluminiumlegierung der Reihe AA6xxx, insbesondere aus AA6063 beziehungsweise aus einer im Wärmeübertragerbau üblichen Modifikation. Insbesondere im Falle geschweißter Rohre oder anderer geschweißter Bauteile ist ein erhöhter Kupfergehalt (>0,5 Gew.-%) wünschenswert. Im Falle extrudierter Rohre bestehen dieselben bevorzugt aus AA3xxx Aluminiumlegierung beziehungsweise aus einer im Wärmeübertragerbau üblichen Modifikation oder AA1xxx Reinaluminium beziehungsweise aus einer im Wärmeübertragerbau üblichen Modifikation.

Als unedles Metall ist bevorzugt Zink vorgesehen. Im Falle einer unedlen Legierung oder Phase weist dieselbe bevorzugt einen Gehalt an Zink, Zinn, Indium und/oder Vanadium auf.

Gemäß der Erfindung sind in dem Strömungskanal Turbulenzeinlagen und/oder Rippen vorgesehen, die zum Einen den Wirkungsgrad verbessern und zum Anderen als Opferanode dienen, so dass zunächst die Turbulenzeinlagen/Rippen korrodieren, bevor anschließend das Kernmaterial angegriffen wird.

Gemäß der Erfindung ist der Strömungskanal und ggf. die Einlage/Rippe mit einer Lotplattierung versehen, so dass der Strömungskanal und die Einlage/Rippe miteinander verlötbar sind.

Die Turbulenzeinlagen und/oder Rippen bestehen - bezogen auf die zu schützenden Kernbereiche - aus einem unedlen Material oder sind mit einem unedlen Metall, einer unedlen Phase oder einer unedlen Legierung überzogen. So sind beispielsweise zinkhaltige Turbulenzeinlagen vorteilhaft.

Die Turbulenzeinlagen und/oder Rippen bestehen bevorzugt aus einer der für den Strömungskanal oben erwähnten Aluminiumlegierungen, insbesondere aus zinkhaltigem oder zinkfreiem AA3xxx beziehungsweise aus einer im Wärmeübertragerbau üblichen Modifikation, oder aus einer Aluminiumlegierung der Reihe AA7xxx, insbesondere AlZn1 beziehungsweise aus einer im Wärmeübertragerbau üblichen Modifikation, oder der Reihe AA8xxx, insbesondere AA8006, AA8011 oder AA8079 beziehungsweise aus einer im Wärmeübertragerbau üblichen Modifikation.

Als Lotplattierung ist eine AlSi-Lotplattierung vorgesehen, wobei die Plattierung unedle Elemente aufweist, und der Siliziumgehalt der Lotplattierung im Bereich von 4 bis 15 Gew.-%, insbesondere von 5 bis 12 Gew.-%, der Zinkgehalt im Bereich von 0,05 bis 10 Gew.-%, insbesondere von 0,2 bis 5 Gew.-%, und der Indium, Zinn und/oder Vanadiumgehalt in einem Bereich von 0,0 bis 0,3 Gew.-% liegt. Bei den unedlen Elementen handelt es sich bevorzugt um Zink und/oder Indium.

Die Dicke einer Plattierung ist bevorzugt möglichst konstant und beträgt 2 bis 40%, insbesondere 2 bis 30%, insbesondere 5 bis 20%, der Dicke des Kernmaterials insbesondere an seiner dünnsten Stelle.

Bevorzugt ist eine mehrschichtige Plattierung vorgesehen, wobei unter einer AlSi-Lotplattierung eine Schutzplattierung etwas edler oder unedler als die AlSi-Lotplattierung vorgesehen ist, die unedler als der zu schützende Bereich ist.

Im Folgenden wird die Erfindung anhand mehrerer Ausführungsbeispiele unter Bezugnahme auf die Zeichnungen im Einzelnen erläutert. Es zeigen:
- Fig. 1: Eine Vorrichtung zur Zufuhr von Verbrennungsluft zu einem Verbrennungsmotor und
- Fig. 2: eine Vorrichtung zum Austausch von Wärme zwischen einem säurehaltigen Gas und einem Wärmetauschermedium gemäß der vorliegenden Erfindung.

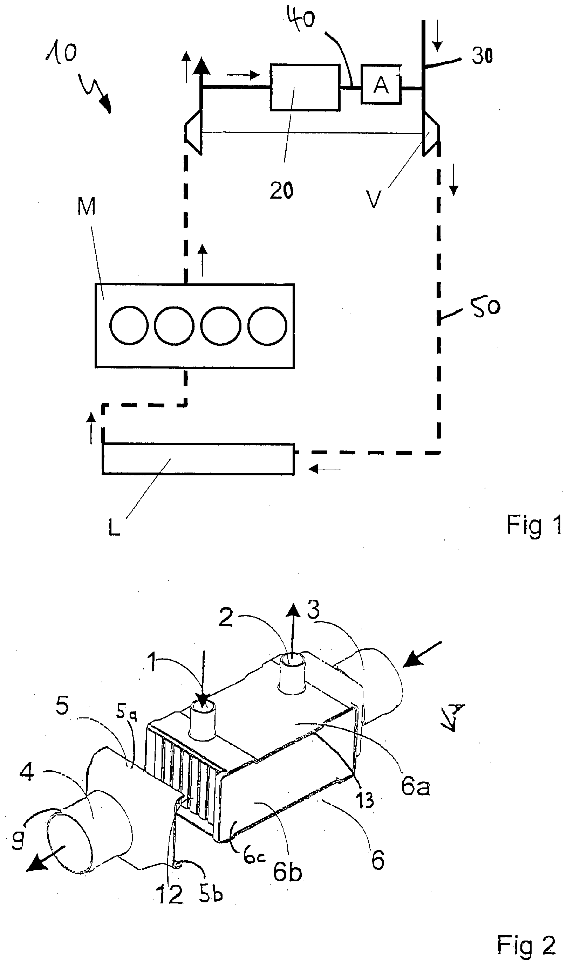

In Fig. 1 ist als Beispiel für eine Vorrichtung zur Zufuhr von Verbrennungsluft zu einem Verbrennungsmotor M ein System 10 mit einer Niederdruck-Abgasrückführung dargestellt. Die Leitungen der Niederdruckseite sind mit durchgezogenen Linien dargestellt, die der Hochdruckseite mit gebrochenen Linien. Die Strömungsrichtungen sind jeweils durch Pfeile verdeutlicht.

Fig. 1 zeigt ein Beispiel einer Niederdruck-Abgasrückführung, wobei das rückzuführende, säurehaltige Abgas von dem vom Motor M kommenden Abgasstrom niederdruckseitig, also nach einer Druckabsenkung, abgezweigt wird. Es wird durch die Abgasrückführleitung 40, in der vorzugsweise ein Abgaskühler 20 angeordnet ist, einer Ansaugleitung 30 zugeführt und dort mit nicht säurehaltiger Umgebungsluft gemischt. Das säurehaltige Gemisch wird von dem Verdichter V, vorzugsweise einem Abgasturbolader, angesaugt und als verdichtete Ladeluft in die Ladeluftleitung 50 gefördert.

Durch den in der Ladeluftleitung angeordneten Ladeluftkühler L wird die Ladeluft gekühlt und anschließend dem Motor M zugeführt. Der Ladeluftkühler L weist dabei erfindungsgemäß eine Vielzahl von Strömungskanälen für Ladeluft auf, die im wesentlichen aus Aluminium oder einer Aluminiumlegierung bestehen.

Bei einem ähnlichen, nicht dargestellten Ausführungsbeispiel ist die Abgasrückführleitung auf der Hochdruckseite angeordnet, zweigt also zwischen dem Motor und der Turbine des Abgasturboladers von der Abgasleitung ab und mündet zwischen dem Verdichter und dem Ladeluftkühler in die Ladeluftleitung.

Fig. 2 zeigt einen erfindungsgemäßen Wärmetauscher in einer teilweisen Explosionsansicht, wie er beispielsweise als Abgaskühler oder Ladeluftkühler Anwendung findet. Die Bezugszeichen 1 und 2 beziehen sich auf eine Zuführung sowie eine Abführung für ein vorzugsweise flüssiges Kühlmittel. Bei diesem Kühlmittel handelt es sich bevorzugt um Wasser, insbesondere Wasser mit Zusatzstoffen, wie beispielsweise Glykol, aus dem Kühlkreislauf. Es können jedoch auch andere Kühlmittel, sowohl in einer gasförmigen als auch in einer flüssigen Phase, vorgesehen sein.

Die Bezugszeichen 3 und 4 beziehen sich auf eine Zuführung und eine Abführung von säurehaltigem Gas, beispielsweise des Abgases beziehungsweise der Ladeluft. Die Zu- und die Abführung sind in Form von Ein- beziehungsweise Auslassflanschen ausgebildet, welche jeweils mit einer weiteren Zuleitung verbunden werden können. Diese Verbindungen können entweder dadurch zustande kommen, dass ein Rohr mit größerem Umfang über die Flansche geschoben wird, oder dass ein Rohr mit kleinerem Umfang in die Öffnung eingeschoben wird. Bevorzugt ist an den jeweiligen Flanschen ein Wulst 9 vorgesehen, der eine stabilere Verbindung zwischen dem Zuleitungsrohr und dem Flansch ermöglicht.

Das Bezugszeichen 6 bezieht sich auf ein Gehäuse für die Vorrichtung zum Austauschen von Wärme. Die Zuführung und Abführung für das Kühlmittel sowie die Zuführung und Abführung für das säurehaltige Gas sowie die Deckeleinrichtung 5 und die dieser gegenüberliegende Deckeleinrichtung sind nicht Bestandteil dieses Gehäuses.

Gemäß einem Ausführungsbeispiel ist ein Abgaskühler bestehend aus Luftkästen, Rohren und Böden, jeweils gefertigt aus einer AA3003 Aluminiumlegierung, vorgesehen. Hierbei ist auf den Rohren und Böden eine flächig möglichst aber nicht notwendigerweise vollständig durchgängige AlSi-Lotplattierung, vorliegend mit einem Siliziumgehalt von ca. 8-12 Gew.-%, mit Zink, wobei der Zinkgehalt vorliegend ca. 2-4 Gew.-% beträgt, in den mit dem Abgas in Kontakt kommenden Bereichen vorgesehen. Ferner enthält die AlSi-Lotplattierung geringe Mengen an Indium, Zinn und Vanadium (jeweils <0,3 Gew.-%) sowie einen geringen Anteil an sonstigen Verunreinigungen. Die Plattierdicke beträgt vorliegend 5 - 15% der Rohrwandstärke.

Gemäß einer Variante ist auch an den Luftkästen eine entsprechende AlSi-Lotplattierung in den mit dem Abgas in Kontakt kommenden Bereichen vorgesehen.

Im Inneren des Abgaskühlers sind Turbulenzeinlagen oder Rippen zur Verbesserung des Wirkungsgrades des Kühlers vorgesehen, welche gemäß dem ersten Ausführungsbeispiel aus Reinaluminium (vorliegend der Reihe AA1145) mit einer der Lotplattierung der Rohre und Böden entsprechenden Lotplattierung bestehen.

Auf Grund der elektrochemischen Potentialdifferenz (vorliegend über 100 mV) zwischen dem edlen Kernbereich und der unedlen Beschichtung (Lotplattierung) oxidiert beziehungsweise korrodiert die unedle Beschichtung (insbesondere der Zink-Bestandteil). Dies hat den Effekt, dass der Korrosionsangriff flächig und insbesondere nicht tiefengängig, das heißt in Form von Lochkorrosion oder interkristalliner Korrosion, erfolgt. Hierbei werden als zusätzlicher Nebeneffekt unter Umständen die vorhandenen WasserstoffIonen reduziert, so dass sich der pH-Wert des Abgaskondensats zu unkritischeren, höheren Werten hin verschiebt.

Gemäß einem weiteren Ausführungsbeispiel ist ein Abgaskühler mit Turbulenzeinlagen aus einer Aluminiumlegierung der Reihe AA7xxx, vorliegend AlZn1, vorgesehen, welche deutlich unedler als die zu schützenden Bauteile des Abgaskühlers sind, so dass zuerst die Turbulenzeinlagen korrodieren.

Als weiteres Ausführungsbeispiel ist ein Abgaskühler vorgesehen, welcher als Kernbereich (Luftkästen, Rohre und Böden) eine AA3003 Aluminiumlegierung ohne Zink aufweist. Darüber ist eine Schicht (ca. 5% der Rohrwandstärke) aus AA3003 Aluminiumlegierung mit Zink und darüber ist eine Schicht (10% der Rohrwandstärke) in Form einer AlSi-Lotplattierung vorgesehen. Hierbei sind die Schichten insbesondere durchgehend sowohl in den Bereichen, die mit dem Abgas in Kontakt stehen, als auch in den übrigen Bereichen vorgesehen.

Gemäß einer Variante sind die Schichten nur in Teilbereichen vorgesehen, die in Kontakt mit dem Abgas stehen, wobei die Schichten nicht notwendigerweise durchgehend ausgebildet sein müssen.

Jede der beschriebenen Beschichtungen und Plattierungen ist vorzugsweise bereits vor der Fertigung der Vorrichtung auf dem jeweiligen Grundmaterial beziehungsweise Halbzeug aufgebracht. Ein Aufbringen auf die Innenseite der Strömungskanäle nach deren Fertigung ist jedoch ebenfalls möglich. In beiden Fällen besonders bevorzugt ist ein Aufbringen des Korrosionsschutzes in Verbindung mit einem organischen oder anorganischen Bindemittel, so dass der Korrosionsschutz zumindest vor einem Lötvorgang in einer chemisch oder physikalisch abgebundenen Matrix auf einer Innenseite des jeweiligen Strömungskanals angeordnet ist.

Die Rohre aller Ausführungsbeispiele sind vorzugsweise extrudiert, aus Blechen gefaltet, gelötet und/oder geschweißt. Neben der beschriebenen Rohrbündelbauweise ist eine entsprechende Ausgestaltung anderer gasführender Vorrichtungen, beispielsweise in Paket-, Scheiben- oder Stapelscheibenbauweise, ebenfalls möglich.

### Folgende Abmessungen sind besonders vorteilhaft

### Indirekter Abgaswärmetauscher:

Bei einem indirekten Abgaswärmetauscher wird das heiße Abgas durch ein Kühlmittel, insbesondere ein flüssiges Kühlmittel, wie beispielsweise Wasser oder eine andere Flüssigkeit, gekühlt, das seinerseits in einem anderen Wärmetauscher, insbesondere in einem Kühlmittelkühler, gekühlt wird. Das Kühlmittel wird vorzugsweise im Kühlmittelkühler mit Luft gekühlt.

### Direkter Abgaswärmetauscher:

Bei einem direkten Abgaswärmetauscher wird das heiße Abgas durch ein Kühlmittel, insbesondere durch ein gasförmiges Kühlmittel wie beispielsweise Luft, direkt gekühlt.

Die "Kanalhöhe Abgas" ist insbesondere die Höhe der Strömungskanäle, in denen das Abgas den Abgaswärmetauscher durchströmt.

Die "Kanalhöhe Kühlmittel" ist insbesondere die Höhe der Strömungskanäle, in denen das Kühlmittel den Abgaswärmetauscher durchströmt.

Die "Strömungslänge Kühlmittel" ist insbesondere die Länge des Strömungsweges, die das Kühlmittel im Abgaswärmetauscher durchströmt, insbesondere die Gesamtlänge des Abgaswärmetauschers.

Die "Strömungslänge Abgas" ist insbesondere die Länge des Strömungsweges, die das Abgas im Abgaswärmetauscher durchströmt, insbesondere die Gesamtlänge des Abgaswärmetauschers.

Die "Rohrwandstärke Abgas" ist insbesondere die Dicke der Rohrwand des Rohres, in dem das Abgas im Abgaswärmetauscher strömt.

Die "Rohrbreite Abgas" ist insbesondere die Breite des Rohres, in dem das Abgas den Abgaswärmetauscher durchströmt.

Die "Rippendichte Kühlmittel" ist insbesondere die Anzahl an turbulenzerzeugenden Elementen, wie Ausprägungen, Winglets, Ausprägungen bzw. Einprägungen in Turbulenzeinlagen, pro einen Dezimeter Länge, die im Kühlmittelkanal/-rohr eingebracht sind.

Die "Rippendicke Kühlmittel" ist insbesondere die Dicke des Materials des turbulenzerzeugenden Elements, wie insbesondere der Turbulenzeinlage, die in das Rohr bzw. den Kanal eingebracht ist, in dem das Kühlmittel strömt. Die "Rippendicke Abgas" ist insbesondere die Dicke des Materials des turbulenzerzeugenden Elements, wie insbesondere der Turbulenzeinlage, die in das Rohr bzw. den Kanal eingebracht ist, in dem das Abgas strömt.

Die "Kanalhöhe Abgas : Kanalhöhe Kühlmittel" ist insbesondere das Verhältnis der Höhe des Kanals, in dem das Abgas strömt zur Höhe des Kanals, in dem das Kühlmittel strömt.

Die "Längsteilung Rippe Kühlmittel" ist insbesondere der Abstand zwischen einem turbulenzerzeugenden Element, insbesondere einer Aus- oder Einprägung in ein Rohr und/oder in eine Turbulenzeinlage, und einem dazu benachbarten turbulenzerzeugenden Element, insbesondere in Strömungsrichtung des Kühlmittels.

Die "Längsteilung Winglets bzw. Längsteilung Winglets Abgas" ist insbesondere der Abstand zwischen einem turbulenzerzeugenden Element, insbesondere einer Aus- oder Einprägung in ein Rohr und/oder in eine Turbulenzeinlage, und einem dazu benachbarten turbulenzerzeugenden Element, insbesondere in Strömungsrichtung des Abgases.

Der "Wingletwinkel" ist insbesondere der Winkel zwischen einem turbulenzerzeugenden Element, insbesondere einer Aus- oder Einprägung in ein Rohr und/oder in eine Turbulenzeinlage, und einem dazu benachbart angeordneten turbulenzerzeugenden Element, insbesondere im Wesentlich senkrecht zur Strömungsrichtung des Abgases.

Der "Wingletversatz Ober- zu Unterschale" ist im Wesentlichen der Abstand, insbesondere in Strömungsrichtung des Abgases, eines turbulenzerzeugenden Elements, insbesondere einer Aus- oder Einprägung in ein Rohr und/oder in eine Turbulenzeinlage, zu dem nächstgelegenen auf der gegenüberliegenden Rohr- bzw. Kanalseite angeordneten turbulenzerzeugenden Element.

Die "Winglethöhe zur Kanalhöhe [%]" ist die Höhe eines turbulenzerzeugenden Elements, insbesondere einer Aus- oder Einprägung in ein Rohr und/oder in eine Turbulenzeinlage, zur Höhe des Kanals, in dem das Kühlmittel oder das Abgas strömt multipliziert mit dem Faktor 100.

Die "Wingletlänge : Winglethöhe" ist das Verhältnis der Länge zur Höhe eines turbulenzerzeugenden Elements, insbesondere einer Aus- oder Einprägung in ein Rohr und/oder in eine Turbulenzeinlage.

Die "Kanalhöhe Kühlluft" ist insbesondere die Höhe der Strömungskanäle, in denen die Kühlluft den Abgaswärmetauscher durchströmt.

Die "Strömungslänge Kühlluft" ist insbesondere die Länge des Strömungsweges, die die Kühlluft im Abgaswärmetauscher durchströmt, insbesondere die Gesamtlänge des Abgaswärmetauschers.

Die "Rippendichte Kühlluft" ist insbesondere die Anzahl an turbulenzerzeugenden Elementen, wie Ausprägungen, Winglets, Ausprägungen bzw. Einprägungen in Turbulenzeinlagen, pro einen Dezimeter Länge, die im Kühlluftkanal/-rohr eingebracht sind.

Die "Rippendicke Kühlluft" ist insbesondere die Dicke des Materials des turbulenzerzeugenden Elements, wie insbesondere der Turbulenzeinlage, die in das Rohr bzw. den Kanal eingebracht ist, in dem die Kühlluft strömt.

Die "Wingletdichte quer" ist die Anzahl an turbulenzerzeugenden Elementen, wie Ausprägungen, Winglets, Ausprägungen bzw. Einprägungen in Turbulenzeinlagen, pro einen Dezimeter Länge.

### Indirekter Abgaswärmetauscher:

| **Merkmal** | **besonders vorteilhaft** | **vorteilhaft** |
|---|---|---|
| Kanalhöhe Abgas [mm] | 4.5-6 | 3-15 |
| Kanalhöhe Kühlmittel [mm] | 1.5-3.2 | 1-3 |
| Strömungslänge Kühlmittel [mm] | ∼80-∼700 | 50-1000 |
| Strömungslänge Abgas [mm] | ∼80-∼700 | 50-1000 |
| Rohrwandstärke Abgas [mm] | 0,4-0.5 | 0.25-0.5 |
| Rohrbreite Abgas [mm] | 13.5-40 | 10-200 |
| Rippendichte Kühlmittel [Ri/dm] | 20-36 | 15-120 |
| Rippendicke Kühlmittel [mm] | 0.1-0.3 | 0.06-1,5 |
| Rippendicke Abgas [mm] | 0.15-0.3 | 0.06-0.5 |
| Kanalhöhe Abgas : Kanalhöhe Kühlmittel [-] | 1.4: 1 bis 4:1 | 0.75:1 bis 10:1 |
| Längsteilung Rippe Kühlmittel [mm] | 4-10 | 1-unendlich |
| Längsteilung Winglets [mm] | 11-40 | 8-200 |
| Längsteilung Rippe Abgas [mm] | 4-16 | 1-unendlich |
| Wingletwinkel [°] | 20-50 | 15-55 |
| Wingletversatz, Ober- zu Unterschale [mm] | 0-27 | 0-200 |
| Winglethöhe zu Kanalhöhe [%] | 20-40 | 10-50 |
| Wingletlänge ; Winglethöhe | | 1:1 bis 1:10 |

### Abgas-Kühler (direkt):

| **Merkmal** | **besonders vorteilhaft** | **vorteilhaft** |
|---|---|---|
| Kanalhöhe Abgas [mm] | 4.5-6 | 2-10 |
| Kanalhöhe Kühlluft [mm] | 4-8 | 1-10 |
| Strömungslänge Kühlluft [mm] | ∼20-∼80 | 10-1000 |
| Strömungslänge Abgas [mm] | ∼50-∼800 | 50-1000 |
| Rohrwandstärke Abgas [mm] | 0,4-0.42 | 0.25-0.5 |
| Rohrbreite | 13.5-40 | 10-200 |
| Rippendichte Kühlluft [Ri/dm] | 20-40 | 10-120 |
| Rippendicke Kühlluft [mm] | 0.08-0.2 | 0.04-0.25 |
| Rippendicke Abgas [mm] | 0.15-0.3 | 0.04-0.5 |
| Kanalhöhe Abgas : Kanalhöhe Kühlluft [-] | 0.5: 1 bis 2:1 | 0.75:1 bis 7.5:1 |
| Längsteilung Rippe Ladeluft [mm] | 4-10 | 1-1000 |
| Längsteilung Winglets Abgas [mm] | 11-40 | 4-200 |
| Längsteilung Rippe Abgas [mm] | 4-16 | 1-unendlich |
| Wingletwinkel Abgas [°] | 20-50 | 15-55 |
| Wingletversatz, Ober- zu Unterschale [mm] | 0-27 | 0-200 |
| Winglethöhe zu Kanalhöhe [%] | 20-40 | 10-50 |
| Wingletdichte quer [Wi/dm] | 7.5-17.5 | 5-18 |
| Wingletlänge:Winglethöhe | 3:1 | 1:1 bis 10:1 |

Die Merkmale der verschiedenen Ausführungsbeispiele sind beliebig miteinander kombinierbar. Die Erfindung ist auch für andere als die gezeigten Gebiete einsatzbar.

## Patentansprüche

1. Vorrichtung zum Austausch von Wärme zwischen einem säurehaltigen Gas und einem Wärmetauschermedium, insbesondere Abgas- und/oder Ladeluftkühler, mit zumindest einem Strömungskanal für das säurehaltige Gas, wobei der zumindest eine Strömungskanal für das säurehaltige Gas im Wesentlichen aus Aluminium und/oder einer Aluminiumlegierung besteht, der zumindest eine Strömungskanal innenseitig mit einem Korrosionsschutz versehen ist und der Korrosionsschutz als Beschichtung ausgebildet ist, **dadurch gekennzeichnet, dass** der Korrosionsschutz elektrochemisch unedle Bereiche aufweist, so dass ein kathodischer Korrosionsschutz für zu schützende Bereiche des Strömungskanals vorgesehen ist und die elektrochemische Potentialdifferenz zwischen den zu schützenden Bereichen und den unedlen Bereichen mindestens 20 mV, insbesondere mindestens 50 mV, beträgt und der Korrosionsschutz aus einem Metall und/oder einer Legierung, insbesondere einer Aluminiumlegierung, besteht, wobei in dem zumindest einen Strömungskanal eine oder mehrere Turbulenzeinlagen und/oder eine oder mehrere Rippen vorgesehen sind und die Turbulenzeinlagen und/oder Rippen bezogen auf die zu schützenden Kernbereiche aus einem unedlen Material bestehen oder mit einem unedlen Metall, einer unedlen Phase oder einer unedlen Legierung überzogen sind, wobei der Strömungskanal und gegebenenfalls die Turbulenzeinlage beziehungsweise Rippe eine Lotplattierung aufweist, der Korrosionsschutz auf der Lotplattierung aufgebracht ist, wobei als Lotplattierung eine AlSi-Lotplattierung vorgesehen ist, wobei die Plattierung unedle Elemente aufweist, und der Siliziumgehalt der Lotplattierung im Bereich von 4 bis 15 Gew.-%, insbesondere von 5 bis 12 Gew.-%, der Zinkgehalt im Bereich von 0,05 bis 10 Gew.-%, insbesondere von 0,2 bis 5 Gew.-%, und der Indium-, Zinn- und/oder Vanadiumgehalt in einem Bereich von 0,0 bis 0,3 Gew.-% liegen.

2. Vorrichtung nach Anspruch 1, **dadurch gekennzeichnet, dass** die Beschichtung die Innenseite des Strömungskanals nur unvollständig bedeckt und insbesondere Risse, Poren, Spalte oder dergleichen aufweist.

3. Vorrichtung nach einem der vorhergehenden Ansprüche, **dadurch gekennzeichnet, dass** zumindest bereichsweise die mit dem säurehaltigen Gas in Kontakt stehenden Flächen mit einem unedlen Metall, einer unedlen Phase oder einer unedlen Legierung überzogen sind und/oder elektrisch leitend mit einem entsprechenden Bereich in Verbindung stehen.

4. Vorrichtung nach einem der vorhergehenden Ansprüche, **dadurch gekennzeichnet, dass** der zumindest eine Strömungskanal für das säurehaltige Gas im Wesentlichen aus einer Aluminiumlegierung der Reihe AA3xxx, insbesondere aus AA3003 oder AA3005 beziehungsweise aus einer im Wärmeübertragerbau üblichen Modifikation, oder aus Reinaluminium (AA1xxx), insbesondere AA1145 oder AA1050 beziehungsweise aus einer im Wärmeübertragerbau üblichen Modifikation, oder aus kupferhaltigen Aluminiumlegierungen der Reihe AA2xxx beziehungsweise aus einer im Wärmeübertragerbau üblichen Modifikation oder aus AA6xxx, insbesondere AA6063 beziehungsweise aus einer im Wärmeübertragerbau üblichen Modifikation besteht.

5. Vorrichtung nach einem der vorhergehenden Ansprüche, **dadurch gekennzeichnet, dass** als unedles Metall Zink, Zinn, Indium oder Vanadium vorgesehen ist, oder dass eine unedle Legierung oder Phase mit Zink, Zinn, Indium und/oder Vanadium vorgesehen ist.

6. Vorrichtung nach einem der vorhergehenden Ansprüche, **dadurch gekennzeichnet, dass** die Turbulenzeinlagen und/oder Rippen im Wesentlichen aus einer Aluminiumlegierung der Reihe AA3xxx, insbesondere zinkhaltig beziehungsweise aus einer im Wärmeübertragerbau üblichen Modifikation, oder der Reihe AA7xxx, insbesondere AlZn1 beziehungsweise aus einer im Wärmeübertragerbau üblichen Modifikation, oder der Reihe AA8xxx, insbesondere AA8006, AA8011 oder AA8079 beziehungsweise aus einer im Wärmeübertragerbau üblichen Modifikation, bestehen.

7. Vorrichtung nach einem der vorhergehenden Ansprüche, **dadurch gekennzeichnet, dass** die Turbulenzeinlagen und/oder Rippen aus insbesondere unbeschichtetem Edelstahl bestehen.

8. Vorrichtung nach einem der vorhergehenden Ansprüche, **dadurch gekennzeichnet, dass** es sich bei den unedlen Elementen um Zink und/oder Indium handelt.

9. Vorrichtung nach einem der vorhergehenden Ansprüche, **dadurch gekennzeichnet, dass** eine Plattierung vorgesehen ist, welche eine weitgehend konstante Dicke von 2 bis 40%, insbesondere 2 bis 30%, insbesondere von 5 bis 20%, einer Wanddicke des Strömungskanals, insbesondere an seiner dünnsten Stelle, aufweist.

10. Vorrichtung nach einem der vorhergehenden Ansprüche, **dadurch gekennzeichnet, dass** der Korrosionsschutz elektrochemisch edler als die Lotplattierung ist.

11. Vorrichtung nach einem der vorhergehenden Ansprüche, **dadurch gekennzeichnet, dass** die Lotplattierung elektrochemisch edler als der Korrosionsschutz ist.

12. Vorrichtung nach einem der vorhergehenden Ansprüche, **dadurch gekennzeichnet, dass** die Vorrichtung zumindest teilweise unter Vakuum oder Schutzgas mit oder ohne ein Flussmittel hartgelötet ist.

## Claims

1. A device for exchanging heat between an acidic gas and a heat exchanger medium, in particular an exhaust gas cooler and/or charge air cooler, comprising at least one flow channel for the acidic gas, wherein the at least one flow channel for the acidic gas is substantially composed of aluminium and/or an aluminium alloy, the at least one flow channel is provided with corrosion protection on the inner surface, and the corrosion protection is designed as a coating, **characterised in that** the corrosion protection includes electrochemically base regions, and so cathodic corrosion protection is provided for regions of the flow channel to be protected, and the electrochemical potential difference between the regions to be protected and the base regions is at least 20 mV, in particular at least 50 mV, and the corrosion protection is composed of a metal and/or an alloy, in particular an aluminium alloy, wherein one or more turbulence inserts and/or one or more ribs are provided in the at least one flow channel and the turbulence inserts and/or ribs are composed of a base material, in terms of the core regions to be protected, or they are coated with a base metal, a base phase, or a base alloy, wherein the flow channel and optionally the turbulence insert or rib includes a solder plating, the corrosion protection is applied to the solder plating, wherein an AlSi solder plating is provided as a solder plating, wherein the plating contains base elements, and the silicon content of the solder plating is in the range of 4 to 15% by weight, in particular 5 to 12% by weight, the zinc content is in the range of 0.05 to 10% by weight, in particular 0.2 to 5% by weight, and the indium, zinc, and/or vanadium content is in a range of 0.0 to 0.3% by weight.

2. The device as recited in claim 1, **characterised in that** the coating only partially covers the inner surface of the flow channel and includes, in particular, fissures, pores, gaps, or the like.

3. The device as recited in one of the preceding claims, **characterised in that** the surfaces that are in contact with the acidic gas are, at least in regions, coated with a base metal, a base phase, or a base alloy, and/or are connected in an electrically conductive manner to a corresponding region.

4. The device as recited in one of the preceding claims, **characterised in that** the at least one flow channel for the acidic gas is substantially composed of an aluminium alloy of the AA3xxx series, in particular AA3003 or AA3005, or of a modification that is typical in heat exchanger design, or of pure aluminium (AA1xxx), in particular AA1145 or AA1050, or of a modification that is typical in heat exchanger design, or of copper-containing aluminium alloys of the AA2xxx series, or of a modification that is typical in heat exchanger design, or of AA6xxx, in particular AA6063, or of a modification that is typical in heat exchanger design.

5. The device as recited in one of the preceding claims, **characterised in that** zinc, tin, indium or vanadium is provided as the base metal, or that a base alloy or phase containing zinc, tin, indium, and/or vanadium is provided.

6. The device as recited in one of the preceding claims, **characterised in that** the turbulence inserts and/or ribs are substantially composed of an aluminium alloy of the AA3xxx series, containing zinc in particular, or of a modification that is typical in heat exchanger design, or the AA7xxx series, in particular AlZn1, or of a modification that is typical in heat exchanger design, or the AA8xxx series, in particular AA8006, AA8011 or AA8079, or of a modification that is typical in heat exchanger design.

7. The device as recited in one of the preceding claims, **characterised in that** the turbulence inserts and/or ribs are composed of uncoated special steel in particular.

8. The device as recited in one of the preceding claims, **characterised in that** the base elements are zinc and/or indium.

9. The device as recited in one of the preceding claims, **characterised in that** a plating is provided that has a largely constant thickness of 2 to 40%, in particular 2 to 30%, in particular 5 to 20% of a wall thickness of the flow channel, in particular at its thinnest point.

10. The device as recited in one of the preceding claims, **characterised in that** the corrosion protection is more electrochemically noble than the solder plating.

11. The device as recited in one of the preceding claims, **characterised in that** the solder plating is more electrochemically noble than the corrosion protection.

12. The device as recited in one of the preceding claims, **characterised in that** the device is brazed with or without a flux, at least partially under vacuum or inert gas.

## Revendications

1. Dispositif pour l'échange de chaleur entre des gaz contenant des acides, et un milieu d'échangeur de chaleur, en particulier refroidisseur de gaz d'échappement et / ou d'air de suralimentation, ledit dispositif comprenant au moins un conduit d'écoulement pour les gaz contenant des acides, où le conduit d'écoulement au moins au nombre de un, prévu pour les gaz contenant des acides, se compose essentiellement d'aluminium et / ou d'un alliage d'aluminium, le conduit d'écoulement au moins au nombre de un étant doté, à l'intérieur, d'une protection contre la corrosion, et la protection contre la corrosion est configurée comme un revêtement, **caractérisé en ce que** la protection contre la corrosion présente des zones électrochimiquement communes, de sorte qu'il est prévu, pour des zones du conduit d'écoulement à protéger, une protection cathodique contre la corrosion, et la différence de potentiel électrochimique entre les zones à protéger et les zones communes est égale au moins à 20 mV, en particulier égale au moins à 50 mV, et la protection contre la corrosion se compose d'un métal et / ou d'un alliage, en particulier d'un alliage d'aluminium, où il est prévu, dans le conduit d'écoulement au moins au nombre de un, un ou plusieurs éléments intercalaires générant des turbulences et / ou une ou plusieurs ailettes, et les éléments intercalaires générant des turbulences et / ou les ailettes se composent, par rapport aux zones centrales à protéger, d'un matériau commun ou d'un métal commun, et sont recouverts d'une phase commune ou d'un alliage commun, où le conduit d'écoulement et éventuellement l'élément intercalaire générant des turbulences, ou l'ailette, présente un placage obtenu par brasage, la protection contre la corrosion étant appliquée sur le placage obtenu par brasage, où il est prévu, comme placage obtenu par brasage, un placage brasé avec un alliage d'AlSi, où le placage présente des éléments communs, et la teneur en silicium du placage obtenu par brasage se situe dans la plage allant de 4 % à 15 % en poids, en particulier de 5 % à 12 % en poids, la teneur en zinc se situant dans la plage allant de 0,05 % à 10 % en poids, en particulier allant de 0,2 % à 5 % en poids, la teneur en indium, en étain et / ou en vanadium se situant dans une plage allant de 0,0 % à 0,3 % en poids.

2. Dispositif selon la revendication 1, **caractérisé en ce que** le revêtement couvre seulement de façon partielle le côté intérieur du conduit d'écoulement et présente en particulier des fissures, des soufflures, des fentes ou autres.

3. Dispositif selon l'une des revendications précédentes, **caractérisé en ce que** les surfaces se trouvant en contact avec les gaz contenant des acides sont recouvertes au moins partiellement d'un métal commun, d'une phase commune ou d'un alliage commun et sont en liaison de façon électroconductrice avec une zone correspondante.

4. Dispositif selon l'une quelconque des revendications précédentes, **caractérisé en ce que** le conduit d'écoulement au moins au nombre de un, prévu pour les gaz contenant des acides, se compose essentiellement d'un alliage d'aluminium de la série AA3xxx, en particulier de la série AA3003 ou AA3005, ou se composant d'une modification habituelle réalisée lors de la construction de l'échangeur de chaleur, ou bien se compose d'aluminium pur (AA1xxx), en particulier de la série AA1145 ou AA1050, ou se composant d'une modification habituelle réalisée lors de la construction de l'échangeur de chaleur, ou bien se compose d'alliages d'aluminium de la série AA2xxx, lesdits alliages contenant du cuivre, ou se composant d'une modification habituelle réalisée lors de la construction de l'échangeur de chaleur, ou bien se compose d'alliages de la série AA6xxx, en particulier de la série AA6063, ou se composant d'une modification habituelle réalisée lors de la construction de l'échangeur de chaleur.

5. Dispositif selon l'une quelconque des revendications précédentes, **caractérisé en ce qu'**il est prévu, comme métal commun, du zinc, de l'étain, de l'indium ou du vanadium, ou bien **en ce qu'**il est prévu un alliage commun ou une phase commune avec du zinc, de l'étain, de l'indium et / ou du vanadium.

6. Dispositif selon l'une quelconque des revendications précédentes, **caractérisé en ce que** les éléments intercalaires générant des turbulences et / ou les ailettes se composent d'un alliage d'aluminium de la série AA3xxx, se composant en particulier d'une modification habituelle qui contient du zinc ou qui est réalisée lors de la construction de l'échangeur de chaleur, ou bien se composent d'un alliage de la série AA7xxx, en particulier du type AlZn1, ou se composant d'une modification habituelle réalisée lors de la construction de l'échangeur de chaleur, ou bien se composent d'alliages de la série AA8xxx, en particulier des séries AA8006, AA8011 ou AA8079, ou se composant d'une modification habituelle réalisée lors de la construction de l'échangeur de chaleur.

7. Dispositif selon l'une quelconque des revendications précédentes, **caractérisé en ce que** les éléments intercalaires générant des turbulences et / ou les ailettes se composent en particulier d'un acier spécial non revêtu.

8. Dispositif selon l'une quelconque des revendications précédentes, **caractérisé en ce qu'**il s'agit, concernant les éléments communs, de zinc et / ou d'indium.

9. Dispositif selon l'une quelconque des revendications précédentes, **caractérisé en ce qu'**il est prévu un placage qui présente une épaisseur dans une large mesure constante, dont la dimension varie entre 2 % et 40 %, en particulier entre 2 % et 30 %, en particulier entre 5 % et 20 %, par rapport à une épaisseur de paroi du conduit d'écoulement, en particulier au niveau de son emplacement le plus mince.

10. Dispositif selon l'une quelconque des revendications précédentes, **caractérisé en ce que** la protection contre la corrosion est électrochimiquement plus commune que le placage obtenu par brasage.

11. Dispositif selon l'une quelconque des revendications précédentes, **caractérisé en ce que** le placage obtenu par brasage est électrochimiquement plus commun que la protection contre la corrosion.

12. Dispositif selon l'une quelconque des revendications précédentes, **caractérisé en ce que** le dispositif est soumis à un brasage fort, réalisé au moins partiellement sous vide ou en atmosphère inerte, avec ou sans fondant.
